# EUROPÄISCHE PATENTANMELDUNG

(11) **EP 1 686 818 A1**
(43) Veröffentlichungstag der Anmeldung: **02.08.2006**
(21) Anmeldenummer: 05001702.9
(22) Anmeldetag: 27.01.2005
(51) Int. Cl.: H04Q 7/36

(54) **Verfahren zum Empfangen, Verfahren zum Senden und Verfahren zum Weiterleiten eines Informationselements über eine Luftschnittstelle sowie Funkstation zum Empfangen, Funkstation zum Senden und Teilnehmerstation zum Weiterleiten**

(71) Anmelder: SIEMENS AKTIENGESELLSCHAFT, 80333 München (DE)
(72) Erfinder: Färber, Michael, 82515 Wolfratshausen (DE)

(57) **Zusammenfassung**

Eine Teilnehmerstation (MS1) empfängt von einer Funkstation (BS1, BS2) ein Informationselement (IE1, IE2), dem die Teilnehmerstation (MS1) nicht selbst betreffende Konfigurationsparameter der Funkstation (BS1, BS2) und/oder Konfigurationsparameter eines Funkkommunikationssystems der Funkstation (BS1, BS2) entnehmbar sind und leitet das Informationselement (IE1, IE2) ohne dessen Inhalt auszulesen an eine andere Funkstation (BS1, AP) weiter. Die in dem Informationselement (IE1, IE2) enthaltenen Konfigurationsparameter können nachfolgend zum Einstellen der Konfigurationsparameter der anderen Funkstation (BS1, AP) verwendet werden.

## Beschreibung

Verfahren zum Empfangen, Verfahren zum Senden und Verfahren zum Weiterleiten eines Informationselements über eine Luftschnittstelle sowie Funkstation zum Empfangen, Funkstation zum Senden und Teilnehmerstation zum Weiterleiten. Die Erfindung betrifft ein Verfahren zum Empfangen, ein Verfahren zum Senden und ein Verfahren zum Weiterleiten eines Informationselements über eine Luftschnittstelle sowie eine entsprechende Funkstation zum Empfangen, eine entsprechende Funkstation zum Senden und eine entsprechende Teilnehmerstation zum Weiterleiten.

Derzeit erfolgt eine Zuordnung von Frequenzbereichen zu Mobilfunktechnologien durch die ITU (International Telecommunications Union) und durch regionale Organisationen wie die CEPT (Conference Européenne des Administrations des Postes et des Telecommunications) in Europa. Auf nationaler Basis gibt es Regulierungsbehörden, die zur Verfügung stehende Frequenzen auf Betreiber von Mobilfunksystemen verteilen. Ein für eine Mobilfunktechnologie bzw. einen Mobilfunkstandard festgelegtes Frequenzband (Spektrum) wird derart aufgeteilt, dass jedem Betreiber ein Teil des Frequenzbandes zur exklusiven Nutzung zugewiesen wird. Innerhalb des ihm zugewiesenen Frequenzbandes kann jeder Betreiber sein Mobilfunksystem entsprechend seiner eigenen Strategie im Rahmen des verwendeten Mobilfunkstandards gestalten.

In zukünftigen Mobilfunksystemen benötigt jeder Betreiber voraussichtlich Trägerbandbreiten von bis zu 100 MHz. Daraus ergibt sich, dass bei Frequenzbandzuweisungen in herkömmlicher Art und Weise mehrere Frequenzbänder mit jeweils 100 MHz Bandbreite benötigt werden, damit eine Vielzahl von Betreibern gleichzeitig sein jeweiliges Mobilfunksystem betreiben kann. Ein derart breites Spektrum an Frequenzen ist allerdings nicht ohne weiteres verfügbar. Aus diesem Grund wird darüber nachgedacht, dass Betreiber in zukünftigen Mobilfunksystemen Frequenzbänder gemeinsam nutzen können (spectrum sharing). Dies bedeutet, dass Frequenzen eines Frequenzbandes zeitgleich von unterschiedlichen Mobilfunksystemen und somit im Extremfall auch durch unterschiedliche Funkzugangstechnologien genutzt werden können. Hieraus resultiert allerdings das Problem, dass es zu verstärkten Interferenzen zwischen Mobilstationen bzw. zwischen Basisstationen der in einem gemeinsamen Frequenzband betriebenen Mobilfunksysteme kommen wird. Damit die entstehenden Interferenzen so gering gehalten werden können, dass jeder Betreiber sein Mobilfunksystem so betreiben kann, dass Datenübertragungen möglichst ungestört erfolgen können, ist es erforderlich, dass die Betreiber die Nutzung eines gemeinsam genutzten Frequenzbandes untereinander koordinieren. In Systemen bei denen beispielsweise CDMA (Code Division Multiple Access) zum Einsatz kommt, bedeutet dies beispielsweise, dass sich die Betreiber kontinuierlich untereinander absprechen müssen, welche Codes von ihren Basisstationen verwendet werden, um so jederzeit eine möglichst große Orthogonalität von Codes benachbarter Basisstationen erreichen zu können.

Die Betreiber müssen somit zur gemeinsamen Nutzung eines Frequenzbandes eine Vielzahl von Konfigurationsparametern ihrer Basisstationen den anderen Betreibern zur Verfügung stellen, damit alle Betreiber in dem gemeinsam genutzten Frequenzband ihre Mobilfunksysteme möglichst störungsfrei betreiben können. Weiterhin ist es erforderlich, dass Änderungen der Konfigurationsparameter einzelner Basisstationen und somit auch das Hinzufügen oder Entfernen von Basisstationen allen Betreibern mitgeteilt wird. Betrachtet man die Vielzahl von Basisstationen die jeder einzelne Betreiber heutzutage bereits verwendet, so ist ersichtlich, dass eine enorme Menge von Informationen zwischen den Betreibern ausgetauscht werden muss.

Der Erfindung liegt daher die Aufgabe zugrunde, ein vorteilhaftes Verfahren sowie entsprechende Funkstationen und eine entsprechende Teilnehmerstation anzugeben, mittels derer Betreiber von Mobilfunksystemen ermöglicht wird, ihre Datenübertragungen in einem gemeinsam genutzten Frequenzband mit geringen gegenseitigen Störungen durchzuführen.

Diese Aufgabe wird mit dem Verfahren sowie den Funkstationen und der Teilnehmerstation gemäß den unabhängigen Ansprüchen gelöst.

Vorteilhafte Ausgestaltungen und Weiterbildungen der Erfindung sind Gegenstand der abhängigen Ansprüche.

Bei dem erfindungsgemäßen Verfahren zum Empfangen eines weitergeleiteten Informationselements empfängt eine erste Funkstation das von einer Teilnehmerstation weitergeleitete Informationselement über eine Luftschnittstelle. Erfindungsgemäß sind dem Informationselement die Teilnehmerstation nicht selbst betreffende Konfigurationsparameter einer zweiten Funkstation und/oder Konfigurationsparameter eines Funkkommunikationssystems der zweiten Funkstation entnehmbar.

Bei dem erfindungsgemäßen Verfahren zum Senden eines weiterzuleitenden Informationselements sendet eine zweite Funkstation das Informationselement ausschließlich zur Weiterleitung über eine Luftschnittstelle an eine Teilnehmerstation und gibt in dem Informationselement die Teilnehmerstation nicht selbst betreffende Konfigurationsparameter der zweiten Funkstation und/oder Konfigurationsparameter eines Funkkommunikationssystems der zweiten Funkstation an.

Bei dem erfindungsgemäßen Verfahren zum Weiterleiten eines Informationselements empfängt eine Teilnehmerstation das Informationselement ohne Auslesen seines Inhalts über eine Luftschnittstelle von einer zweiten Funkstation und leitet das Informationselement über eine Luftschnittstelle an eine erste Funkstation weiter. Erfindungsgemäß sind dem weitergeleiteten Informationselement die Teilnehmerstation nicht selbst betreffende Konfigurationsparameter der zweiten Funkstation und/oder Konfigurationsparameter eines Funkkommunikationssystems der zweiten Funkstation entnehmbar.

Die den drei Verfahren gemeinsame erfinderische Idee besteht darin, dass durch die erfindungsgemäßen Verfahren die Teilnehmerstation nicht selbst betreffende Konfigurationsparameter der zweiten Funkstation und/oder Konfigurationsparameter eines Funkkommunikationssystems der zweiten Funkstation der ersten Funkstation zur Verfügung gestellt werden. Die erste Funkstation verfügt dadurch über Konfigurationsparameter der zweiten Funkstation aus denen sie beispielsweise Rückschlüsse auf die Wechselwirkung der eigenen Datenübertragungen mit Übertragungen der zweiten Funkstation ziehen kann. In diesem Zusammenhang ist es selbstverständlich günstig, wenn das Informationselement zusätzlich auch Konfigurationsparameter der zweiten Funkstation enthält, die die Teilnehmerstation betreffen. Das Informationselement und somit die Konfigurationsparameter werden von der Teilnehmerstation weder verwertet noch bearbeitet.

In bekannten Funkkommunikationssystemen kann eine Teilnehmerstation lediglich einige aktuelle Konfigurationsparameter einer Funkstation messen, sowie einige wenige standardisierte Informationen erkennen, die beispielsweise über einen Rundsendekanal der Funkstation übertragen werden. Es handelt sich in diesem Fall um Konfigurationsparameter, die von der Teilnehmerstation selbst ermittelt werden können und die sie daher selbst betreffen. Insbesondere kann die Teilnehmerstation für derartige, sie selbst betreffende Konfigurationsparameter nur einen Momentanwert ermitteln. Z.B. einen aktuellen Wert der Sendeleistung oder welche Dienste aktuell in der Funkstation aktiv sind. Die Teilnehmerstation kann aber keine Konfigurationsparameter erfassen, die im Parameterraum der Funkstation beispielsweise mittels eines Wartungszentrums oder eines Wartungsterminals lokal definiert wurden. Beispielsweise kann die Teilnehmerstation nicht erkennen, wenn ein Dienst für die Funkstation konfiguriert wurde, aber momentan nicht aktiv ist. Die Erfindung ermöglicht jedoch auch Konfigurationsparameter, die Teilnehmerstation nicht selbst betreffen, in der Teilnehmerstation zu speichern und einer anderen Funkstation zur Verfügung zu stellen.

Vorteilhafter Weise werden dem Informationselement entnehmbare Konfigurationsparameter bei der Einstellung der Konfigurationsparameter der ersten Funkstation berücksichtigt.

Konfigurationsparameter der zweiten Funkstation beinhalten beispielsweise folgende Größen:
- eine verwendete Sendeleistung, sowie einen maximal einstellbarer Wert der Sendeleistung,
- eine Basisstationsklasse, wobei jeder Basisstationsklasse beispielsweise ein maximal einstellbarer Wert der Sendeleistung und/oder eine Empfangsempfindlichkeit der Station zugeordnet ist,
- die aktuelle Neigung einer Antennenkeule (Tilt), sowie Ober- und Untergrenzen der Neigung der Antennenkeule,
- unterstützte Dienste wie z.B. ein Multimedia Broadcast Multicast Service (MBMS)
- oder in einem CDMA-System von der zweiten Funkstation verwendete Codes.

Für die erste Funkstation können beispielsweise für Datenübertragung in einem CDMA-System verwendete Codes aufgrund des empfangenen, weitergeleiteten Informationselements derart ausgewählt werden, dass möglichst geringe Interferenzen mit den Datenübertragungen, das heißt mit den von der zweiten Funkstation verwendeten Codes, auftreten.

Für die erfindungsgemäßen Verfahren ist es von Nutzen, wenn möglichst viele Konfigurationsparameter der zweiten Funkstation in dem Informationselement enthalten sind. Vorzugsweise enthält das Informationselement zumindest diejenigen Konfigurationsparameter der zweiten Funkstation, die Eigenschaften von Datenübertragungen der zweiten Funkstation über eine Luftschnittstelle parametrisieren bzw. Auswirkungen auf die Datenübertragungen der ersten Funkstation haben können. Insbesondere ist es nützlich, wenn in einem CDMA-System alle von der zweiten Funkstation verwendeten Codes in dem Informationselement angegeben werden.

Die erste und zweite Funkstation können selbstverständlich sowohl zu dem gleichen Funkkommunikationssystem, als auch zu unterschiedlichen Funkkommunikationssystemen gehören. Weiterhin können für eine Kommunikation von Teilnehmerstationen über einer Luftschnittstelle mit der ersten oder mit der zweiten Funkstation sowohl gleiche, als auch unterschiedliche Funkzugangstechnologien verwendet werden. Beispielsweise kann es sich bei der ersten Funkstation um eine Basisstation gemäß dem GSM (Global System for Mobile Communications)-Standard handeln, während die zweite Funkstation beispielsweise gemäß dem UMTS (Universal Mobile Telecommunications System)-Standard betrieben wird.

Sind in dem Informationselement Konfigurationsparameter des Funkkommunikationssystems der zweiten Funkstation angegeben, so können auch diese Konfigurationsparameter bei der Einstellung der Konfigurationsparameter der ersten Funkstation berücksichtigt werden und beispielsweise zur Steuerung von Datenübertragungen der ersten Funkstation verwendet werden.

Unter Konfigurationsparametern des Funkkommunikationssytems der zweiten Funkstation sind beispielsweise folgende Parameter zu verstehen, ohne dass die Erfindung auf die nachfolgend angegebenen Parameter beschränkt sein soll:
- Datenraten, mit denen die zweite Funkstation Daten in ihrem Funkzugangsnetz an das daran angeschlossene Kernnetz weiterleitet oder weiterleiten kann,
- Datenraten, mit denen die zweite Funkstation Daten über ihr Funkzugangsnetz empfängt oder empfangen kann,
- Auslastung des Kernnetzes,
- Rate unabsichtlich unterbrochener Verbindungen (call drop rate),
- Anzahl der von der zweiten Funkstation versorgten Funkzellen,
- oder beispielsweise die Anzahl der in den von der zweiten Funkstation versorgten Funkzellen auftretenden Zellwechsel (handover).
- Neigung von Antennen anderer Funkstationen,
- Hardware- oder Software-Zustand der zweiten Funkstation (z.B. Fehlerstatus einer Baugruppe).

Es ist von Vorteil, wenn dem Informationselement entnehmbare Konfigurationsparameter zumindest teilweise derart verschlüsselt sind, dass ausschließlich Funkstationen des die Konfigurationsparameter betreffenden Funkkommunikationssystems diese Konfigurationsparameter entschlüsseln können.

Üblicherweise handelt es sich bei Konfigurationsparametern des Funkkommunikationssystems der zweiten Funkstation, um Konfigurationsparameter, die der Betreiber des Funkkommunikationssystems der zweiten Funkstation nicht anderen Betreibern zugänglich machen möchte. Werden insbesondere die Konfigurationsparameter des Funkkommunikationssystems der zweiten Funkstation in dem Informationselement verschlüsselt angegeben, ist sichergestellt, dass diese Konfigurationsparameter nur unter Verwendung des Schlüssels entschlüsselt werden können. Der verwendete Schlüssel ist vorzugsweise nur in dem Funkkommunikationssystem der zweiten Funkstation bekannt, kann aber selbstverständlich auch anderen Funkkommunikationssystemen zur Verfügung gestellt werden, sofern der Betreiber des Funkkommunikationssystems der zweiten Funkstation diese Möglichkeit vorsieht.

Gleichzeitig werden jedoch beispielsweise die nicht die Teilnehmerstation betreffenden Konfigurationsparameter der zweiten Funkstation unverschlüsselt übertragen. Auf diese Weise können die Konfigurationsparameter der zweiten Funkstation von der ersten Funkstation zur Einstellung ihrer Konfigurationsparameter verwendet werden, beispielsweise um Interferenzen zu reduzieren, unabhängig davon, ob die erste Funkstation zu dem gleichen Funkkommunikationssystem gehört wie die zweite Funkstation.

Generell können die Konfigurationsparameter der zweiten Funkstation in zwei Segmente aufgeteilt werden. In einem ersten Segment befinden sich öffentliche, d.h. unverschlüsselte Informationen, die im Wesentlichen dazu dienen einen Störungsarmen Betrieb vieler Betreiber innerhalb eines Frequenzbandes zu ermöglichen. In einem zweiten Segment befinden sich Daten, die durch Verschlüsselung nur Funkstationen des Betreibers der zweiten Funkstation zugänglich sind. Dadurch können Netzoptimierungen durchgeführt werden, und die Funkstationen können die verschlüsselten Daten für autarke und lokale Selbstoptimierungsalgorithmen nutzen. Die Zugehörigkeit von die Teilnehmerstation nicht selbst betreffenden Konfigurationsparametern und von Konfigurationsparametern des Funkkommunikationssystem zu den beiden Segmenten kann der Betreiber des Funkkommunikationssystems der zweiten Funkstation beliebig und sowohl starr als auch dynamisch festlegen.

Vorteilhafterweise ist dem Informationselement eine Referenzzeit entnehmbar, zu der das Informationselement erstellt wurde. Auf diese Weise kann von der ersten Funkstation oder einer anderen Einrichtung eines Funkkommunikationssystems der ersten Funkstation ermittelt werden, ob die in dem Informationselement enthaltenden Konfigurationsparameter noch aktuell genug sind, um beispielsweise die Konfigurationsparameter der ersten Funkstation in Abhängigkeit von den empfangenen Konfigurationsparametern einzustellen. Ist das Informationselement älter als beispielsweise ein vorgegebener Grenzwert, ist es günstig, die in dem Informationselement enthaltenen Konfigurationsparameter zu verwerfen.

Es von Vorteil, wenn dem Informationselement eine Kennung der zweiten Funkstation entnehmbar ist.

Werden beispielsweise von der ersten Funkstation mehrere Informationselemente empfangen, können diese aufgrund der jeweiligen Kennungen unterschieden werden. Zum Einstellen der Konfigurationsparameter der ersten Funkstation können somit die Konfigurationsparameter unterschiedlicher Funkstationen getrennt berücksichtigt werden. Verfügt die erste Funkstation beispielsweise über Sektorantennen, genügt es zur Einstellung der Konfigurationsparameter eines Sektors ausschließlich Informationselemente von denjenigen Funkstationen zu berücksichtigen, die in einem Funkbereich dieses Sektors liegen bzw. nach dem Einstellen liegen werden. Selbst wenn empfangene Informationselemente keine Kennung aufweisen, können die Konfigurationsparameter der ersten Funkstation selbstverständlich trotzdem in Abhängigkeit von den in den Informationselementen angegebenen Konfigurationsparametern der entsprechenden Funkstationen eingestellt werden. Allerdings kann eine Einstellung der Konfigurationsparameter der ersten Funkstation in diesem Fall nur derart erfolgen, dass den Informationselementen entnehmbare Konfigurationsparameter anderer Funkstationen gemeinsam berücksichtigt werden.

Vorteilhafterweise sind dem Informationselement von der Teilnehmerstation nicht ermittelte Konfigurationsparameter der zweiten Funkstation entnehmbar.

Die erfindungsgemäßen Funkstationen sowie die erfindungsgemäße Teilnehmerstation weisen alle Merkmale auf, die zur Durchführung der erfindungsgemäßen Verfahren benötigt werden. Insbesondere können entsprechende Mittel zur Durchführung der einzelnen Verfahrensschritte oder Verfahrensvarianten vorgesehen sein.

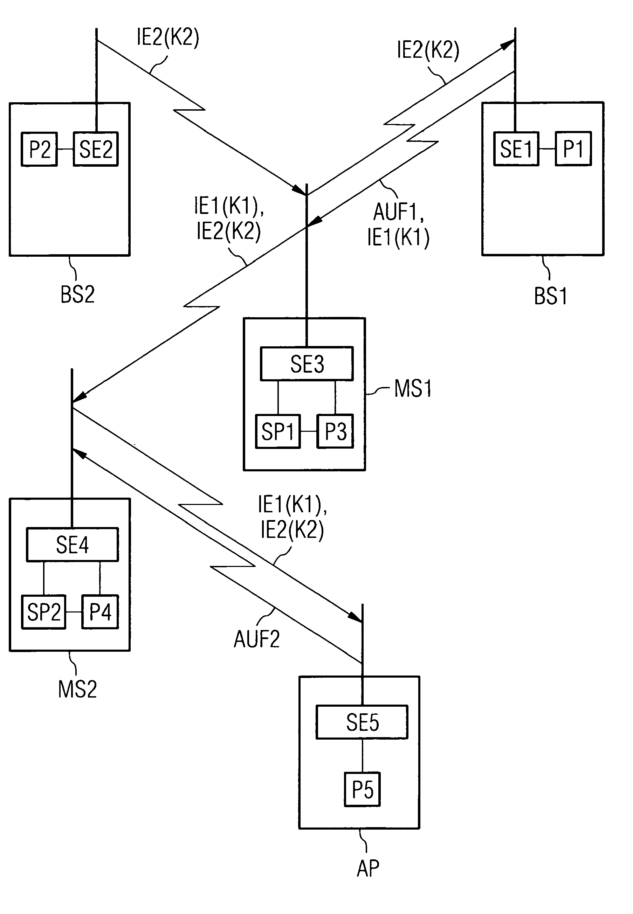

Die Erfindung wird im Folgenden anhand von in der Figur dargestellten Ausführungsbeispielen näher erläutert.

Eine Teilnehmerstation ist beispielsweise ein Mobilfunkendgerät, insbesondere ein Mobiltelefon oder auch eine ortsbewegliche oder ortsfeste Vorrichtung zur Übertragung von Bild-und/oder Tondaten, zum Fax-, Short Message Service SMS-, Multimedia Messaging Service MMS- und/oder Email-Versand und/oder zum Internet-Zugang.

Eine Funkstation ist eine netzseitige Einrichtung, die über eine Luftschnittstelle von einer Teilnehmerstation Nutz-und/oder Signalisierungsdaten empfängt und/oder Nutz-und/oder Signalisierungsdaten an die Teilnehmerstation sendet. Eine Funkstation ist über weitere netzseitige Einrichtungen mit einem Kernnetz verbunden, über das Verbindungen in andere Funkkommunikationssysteme oder in andere Datennetze erfolgen. Unter einem Datennetz ist beispielsweise das Internet oder ein Festnetz mit beispielsweise leitungsvermittelten oder packetvermittelten Verbindungen für z.B. Sprache und/oder Daten zu verstehen.

Die Erfindung kann vorteilhaft in beliebigen Funkkommunikationssystemen verwendet werden. Unter Funkkommunikationssystemen sind Systeme zu verstehen, in denen eine Datenübertragung zwischen Teilnehmerstationen und Funkstationen über eine Luftschnittstelle erfolgt. Die Datenübertragung kann sowohl bidirektional als auch unidirektional erfolgen. Funkkommunikationssysteme sind insbesondere beliebige Mobilfunksysteme beispielsweise nach dem GSM- oder dem UMTS-Standard. Auch zukünftige Mobilfunksysteme, beispielsweise der vierten Generation, sowie Ad-hoc-Netze sollen unter Funkkommunikationssystemen verstanden werden. Funkkommunikationssysteme sind beispielsweise auch drahtlose lokale Netze (WLANs: Wireless Local Area Networks) gemäß den Standards IEEE (Institute of E-lectrical and Electronics Engineers) 802.11a-i, HiperLAN1 und HiperLAN2 (HiperLAN: high performance radio local area network) sowie Bluetooth-Netze und Breitbandnetze mit drahtlosem Zugang beispielsweise gemäß IEEE 802.16.

Im Folgenden wird die Erfindung am Beispiel von Mobilfunksystemen nach dem UMTS-Standard und einem IEEE 802.16-Standard (beispielsweise WiMax) beschrieben, ohne jedoch damit zum Ausdruck bringen zu wollen, dass die Erfindung hierauf beschränkt sein soll.

Die Figur zeigt schematisch eine erste Basisstation BS1 mit einer ersten Sende- und Empfangseinheit SE1 sowie einer ersten Steuereinheit P1 zum Steuern der ersten Sende- und Empfangseinheit SE1 sowie zum Einstellen aller Konfigurationsparameter der ersten Basisstation BS1. Dargestellt ist weiterhin eine zweite Basisstation BS2 mit einer zweiten Sende- und Empfangseinheit SE2 und einer zweiten Steuereinheit P2 zum Steuern der zweiten Sende- und Empfangseinheit SE2 sowie zum Einstellen aller Konfigurationsparameter der zweiten Basisstation BS2. Die erste Basisstation BS1 und die zweite Basisstation BS2 gehören beide zum gleichen Funkkommunikationssystem gemäß dem UMTS-Standard.

Die zweite Basisstation BS2 erzeugt ein zweites Informationselement IE2, in dem sie sowohl diejenigen Konfigurationsparameter angibt, die für eine Kommunikation mit einer ersten Mobilstation MS1 erforderlich sind, als auch diejenigen Konfigurationsparameter, die nicht die erste Mobilstation MS1 betreffen. Bei den Konfigurationsparametern der zweiten Basisstation BS2, die nicht die erste Mobilstation MS1 betreffen, handelt es sich beispielsweise auch um Zeitlagen und Codes, die die zweite Basisstation BS2 für Datenverbindungen mit anderen, nicht dargestellten Mobilstationen verwendet. Selbstverständlich kann das zweite Informationselement IE2 auch von einer anderen Einrichtung des Funkkommunikationssystem der zweiten Basisstation BS2, beispielsweise einem Basisstationscontroller, der sämtliche Konfigurationsparameter der zweiten Basisstation BS2 kennt, erzeugt werden.

Die zweite Basisstation BS2 überträgt nachfolgend das zweite Informationselement IE2, das mit einer zweiten Kennung K2 der zweiten Basisstation BS2 versehen ist, über eine Luftschnittstelle an die erste Mobilstation MS1. Neben den Konfigurationsparametern der zweiten Basisstation BS2, die unverschlüsselt in dem zweiten Informationselement enthalten sind, sind in verschlüsselter Form auf Konfigurationsparameter des Funkkommunikationssystems der zweiten Basisstation BS2 in dem zweiten Informationselement IE2 enthalten. Beispielsweise geben diese Konfigurationsparameter an, dass die zweite Basisstation BS2 Daten über ein nicht dargestelltes, an die zweite Basisstation BS2 angeschlossenes Funkzugangsnetz in ein ebenfalls nicht dargestelltes Kernnetz mit einer Datenrate von z.B. 5 GBit/sec weiterleiten kann.

Die erste Mobilstation MS1 empfängt das zweite Informationselement IE2 mittels einer dritten Sende- und Empfangseinheit SE3 und legt das zweite Informationselement IE2 ohne seinen Inhalt auszulesen, in einem ersten Speicher SP1 ab. Die erste Mobilstation MS1 weist eine dritte Steuereinheit P3 auf, die das Einschreiben und Auslesen aus dem ersten Speicher SP1 sowie den Betrieb der dritten Sende- und Empfangseinheit SE3 steuert. Die dritte Steuereinheit P3 ist auch für das Einstellen aller anderen Konfigurationsparameter, die zum Betrieb der ersten Mobilstation MS1 erforderlich sind, verantwortlich.

Die erste Mobilstation MS1 befindet sich im Empfangsbereich der ersten Basisstation BS1. Die erste Basisstation BS1 sendet der ersten Mobilstation MS1 über eine Luftschnittstelle eine erste Aufforderung AUF1, ihr alle Informationselemente weiterzuleiten, die der ersten Mobilstation MS1 bekannt sind, d.h. die sich in dem ersten Speicher SP1 befinden. Alternativ dazu enthält die erste Aufforderung AUF1 auch eine Angabe darüber, wie alt die an die erste Basisstation BS1 weiterzuleitenden Informationselemente maximal sein dürfen. Die erste Mobilstation MS1 leitet auf Grund der ersten Aufforderung AUF1 alle in dem Speicher SP1 gespeicherten Informationselemente beziehungsweise diejenigen Informationselemente, die jünger sind als ein in der ersten Aufforderung AUF1 angegebener Grenzwert, über die Luftschnittstelle an die erste Basisstation BS1 weiter.

In diesem Ausführungsbeispiel befindet sich nur das zweite Informationselement IE2 der zweiten Basisstation BS2 in dem ersten Speicher SP1 der ersten Mobilstation MS1. Die erste Mobilstation MS1 leitet daher das zweite Informationselement IE2 an die erste Basisstation BS1 weiter. In der ersten Basisstation BS1 wird das zweite Informationselement IE2 mit der ersten Sende- und Empfangseinheit SE1 empfangen und mittels der ersten Steuereinheit P1 werden die in dem zweiten Informationselement IE2 angegebenen Konfigurationsparameter ausgelesen und verarbeitet.

Beispielsweise wurde die zweite Basisstation BS2 von dem Betreiber des Funkkommunikationssystems der ersten Basisstation BS1 neu aufgestellt. Die erste Basisstation BS1 erfährt beispielsweise erstmalig durch das zweite Informationselement IE2 die von der zweiten Basisstation BS2 verwendeten Konfigurationsparameter. Sie berücksichtigt diese Konfigurationsparameter nachfolgend zur Einstellung ihrer eigenen Konfigurationsparameter. Insbesondere verwendet die erste Basisstation BS1 nachfolgend Zeitlagen und Codes, die mit den Zeitlagen und Codes der zweiten Basisstation BS2 möglichst wenig interferieren. Dies ist erforderlich, da die erste Basisstation BS1 und die zweite Basisstation BS2 benachbart sind, das heißt so dicht beieinander liegen, dass sich die jeweiligen Datenübertragungen stören können.

Selbstverständlich kann das zweite Informationselement IE2 auch von einer an die erste Basisstation BS1 angeschlossenen Einheit des Funkkommunikationssystems der ersten Basisstation BS1 ausgewertet werden. Bei einer derartigen Einrichtung, die beispielsweise der ersten Basisstation BS1 die zu verwendenden Konfigurationsparameter vorgibt, handelt es sich beispielsweise um einen Basisstationscontroller. Aus Gründen der Übersichtlichkeit ist eine entsprechende Einheit in der Figur nicht dargestellt.

In einem nicht dargestellten Ausführungsbeispiel überträgt die erste Mobilstation MS1 das zweite Informationselement IE2 an die erste Basisstation BS1 ohne zuvor eine Aufforderung zu erhalten. Beispielsweise erfolgt die Übertragung automatisch, wenn sich die erste Mobilstation MS1 in dem Funkempfangsbereich der ersten Basisstation BS1 befindet.

In dem in der Figur dargestellten Ausführungsbeispiel empfängt die erste Mobilstation MS1 von der ersten Basisstation BS1 über die Luftschnittstelle ein erstes Informationselement IE1, dem sowohl diejenigen Konfigurationsparameter entnehmbar sind, die für eine Kommunikation zwischen der ersten Mobilstation MS1 und der ersten Basisstation BS1 erforderlich sind, als auch diejenigen Konfigurationsparameter, die nicht die erste Mobilstation MS1 betreffen. Bei den Konfigurationsparametern der ersten Basisstation BS1, die nicht die erste Mobilstation MS1 betreffen, handelt es sich beispielsweise auch um Zeitlagen und Codes, die die erste Basisstation BS2 - beispielsweise nach Berücksichtigung der zweiten Informationen IE2 - für Datenverbindungen mit anderen, nicht dargestellten Mobilstationen verwendet. Das erste Informationselement IE1 ist mit einer ersten Kennung K1 der ersten Basisstation BS1 versehen und wird von der ersten Mobilstation MS1 im ersten Speicher SP1 gespeichert. Neben den Konfigurationsparametern der ersten Basisstation BS1, die unverschlüsselt in dem ersten Informationselement IE1 enthalten sind, sind in verschlüsselter Form Konfigurationsparameter des Funkkommunikationssystems der ersten Basisstation BS1 in dem ersten Informationselement IE1 enthalten. Beispielsweise geben diese Konfigurationsparameter an, dass die erste Basisstation BS1 Daten über ein nicht dargestelltes, an die erste Basisstation BS1 angeschlossenes Funkzugangsnetz in ein ebenfalls nicht dargestelltes Kernnetz mit einer Datenrate von z.B. 2 GBit/sec weiterleiten kann.

Die erste Mobilstation MS1 leitet das erste und zweite Informationselement IE1, IE2 über eine Luftschnittstelle an eine zweite Mobilstation MS2 weiter. Die zweite Mobilstation MS2 empfängt das erste und das zweite Informationselement IE1, IE2 mit einer vierten Sende- und Empfangseinheit SE4 und speichert die beiden Informationselemente IE1, IE2 in einem zweiten Speicher SP2. Gesteuert wird der Betrieb der zweiten Mobilstation MS2, das heißt insbesondere die vierte Sende-und Empfangseinheit SE4 und das Einspeichern und Auslesen des zweiten Speichers SP2 von einer vierten Steuereinheit P4.

Bei der ersten und der zweiten Mobilstation MS1, MS2 handelt es sich beispielsweise um Teilnehmerstationen, die sowohl Daten gemäß dem UMTS-Standard als auch gemäß einem IEEE 802.16-Standard (z.B. WiMax) empfangen und senden können. Die beiden Informationselemente IE1, IE2 empfängt die zweite Mobilstation MS2 von der ersten Mobilstation MS1 beispielsweise mittels Übertragungstechniken gemäß IEEE 802.16.

Die zweite Mobilstation MS2 bewegt sich nach dem Empfang der beiden Informationselemente IE1, IE2 in den Funkempfangsbereich eines gemäß einem IEEE 802.16-Standard betriebenen Zugangspunktes AP eines Funkkommunikationssystems. Der Zugangspunkt AP verwendet beispielsweise die gleichen Frequenzen für Funkübertragungen gemäß IEEE 802.16 wie das Funkkommunikationssystem, dem die erste Basisstation BS1 und die zweite Basisstation BS2 angehören, für Datenübertragungen gemäß dem UMTS-Standard. Damit der Zugangspunkt AP seine Konfigurationsparameter derart einstellen kann, dass seine Datenübertragung weder Übertragungen im Funkkommunikationssystem der ersten und zweiten Basisstation BS1, BS2 stören, noch von dort durchgeführten Datenübertragungen selbst gestört werden, ist es erfindungsgemäß vorgesehen, dass der Zugangspunkt AP alle Mobilstationen, die sich in seinen Einzugsbereich, das heißt in seinen Funkempfangsbereich hinein bewegen, dazu auffordert, ihm gespeicherte Informationselemente weiterzuleiten. Der Zugangspunkt AP sendet daher über eine Luftschnittstelle eine zweite Aufforderung AUF2 an die zweite Mobilstation MS2 und fordert diese dazu auf, ihm die gespeicherten Informationselemente weiterzuleiten. Die zweite Mobilstation MS2 leitet auf Grund der zweiten Aufforderung AUF2 das erste und zweite Informationselement IE1, IE2 an den Zugangspunkt AP weiter.

Der Zugangspunkt AP verfügt über eine fünfte Sende- und Empfangseinheit SE5 sowie über eine fünfte Steuereinheit P5 zum Steuern des Zugangspunktes AP insbesondere zum Steuern der Sende- und Empfangseinheit SE5 sowie zum Auswerten der empfangenen ersten und zweiten Informationselemente IE1, IE2, die aufgrund der ersten und zweiten Kennung K1, K2 der ersten und zweiten Basisstation BS1, BS2 zugeordnet werden können. Die in den beiden Informationselementen IE1, IE2 enthaltenen Konfigurationsparameter der ersten Basisstation BS1 und der zweiten Basisstation BS2 werden von dem Zugangspunkt AP ausgewertet und zur Einstellung der eigenen Konfigurationsparameter berücksichtigt. Die ebenfalls in dem ersten und zweiten Informationselement IE1, IE2 enthaltenen verschlüsselten Konfigurationsparameter des Funkkommunikationssystems der ersten beziehungsweise zweiten Basisstation BS1, BS2 kann der Zugangspunkt AP nicht entschlüsseln und verwirft diese daher.

Die erfindungsgemäßen Verfahren können insbesondere dann vorteilhaft eingesetzt werden, wenn alle Funkstationen aller Betreiber, die einen Frequenzbereich gemeinsam nutzen, das heißt auf den dort verwendeten Frequenzen zeitgleich senden und/oder empfangen, entsprechende Informationselemente mit ihren Konfigurationsparametern und/oder den Konfigurationsparametern ihrer Funkkommunikationssysteme erzeugen und an möglichst alle Teilnehmerstation senden beziehungsweise von möglichst allen Teilnehmerstationen empfangen, die sich in dem jeweiligen Funkempfangsbereich der entsprechenden Funkstation befinden. Auf diese Weise können aktuelle Konfigurationsparameter, das heißt insbesondere Änderungen von Konfigurationsparametern vorhandener Funkstationen oder das Hinzufügen von Funkstationen mit neuen Konfigurationsparametern, auf schnelle und dezentrale Weise zwischen Betreibern der betroffenen Funkkommunikationssysteme kommuniziert werden.

Insbesondere ermöglicht die Erfindung, dass auf komplizierte Mechanismen, die auf höheren hierarchischen Ebenen einen Konfigurationsparameteraustausch beispielsweise über an die Funkkommunikationssysteme angeschlossene Kernnetze steuern, verzichtet werden kann. Üblicherweise ist eine Vielzahl von Teilnehmerstationen mit einer Funkstation verbunden oder hält sich in dem Funkbereich der Funkstation auf und es kommt auch relativ häufig zum Wechsel einer Teilnehmerstation von einer Funkstation zu einer benachbarten Funkstation. Den Betreibern von Funkkommunikationssystem wird daher durch die Erfindung eine Möglichkeit an die Hand gegeben, Konfigurationsinformationen von Funkstationen schnell und unmittelbar dort zu erzeugen und auszutauschen, wo sie benötigt werden. Da Teilnehmerstationen sowieso mit Funkstationen in ihrer näheren Umgebung kommunizieren, entsteht durch die Erfindung gegenüber herkömmlichen Funkkommunikationssystemen durch die Übertragung der erfindungsgemäßen Informationselemente lediglich eine geringe zusätzliche Datenlast auf der Luftschnittstelle.

Weiterhin kann vorgesehen sein, dass Funkstationen nur dann Informationselemente erzeugen und an in ihrem Funkbereich lokalisierte Teilnehmerstationen senden, wenn sich wenigstens ein Konfigurationsparameter oder bestimmte Konfigurationsparameter geändert haben, oder wenn seit dem letzten Erstellen und/oder Senden von Informationselementen ein bestimmter Zeitraum verstrichen ist. Auf diese Weise kann eine durch das Senden und Weiterleiten von Informationselementen entstehende Datenlast auf der Luftschnittstelle reduziert werden.

## Patentansprüche

1. Verfahren zum Empfangen eines weitergeleiteten Informationselements (IE2, IE1),
**dadurch gekennzeichnet,**
**dass** eine erste Funkstation (BS1, AP) das von einer Teilnehmerstation (MS1) weitergeleitete Informationselement (IE1, IE2) über eine Luftschnittstelle empfängt, wobei dem Informationselement die Teilnehmerstation (MS1) nicht selbst betreffende Konfigurationsparameter einer zweiten Funkstation (BS1, BS2) und/oder Konfigurationsparameter eines Funkkommunikationssystems der zweiten Funkstation (BS1, BS2) entnehmbar sind.

2. Verfahren zum Senden eines weiterzuleitenden Informationselements (IE1, IE2),
**dadurch gekennzeichnet,**
**dass** eine zweite Funkstation (BS1, BS2)
- das Informationselement (IE1, IE2) ausschließlich zur Weiterleitung über eine Luftschnittstelle an eine Teilnehmerstation (MS1) sendet,
- und in dem Informationselement die Teilnehmerstation (MS1) nicht selbst betreffende Konfigurationsparameter der zweiten Funkstation (BS1, BS2) und/oder Konfigurationsparameter eines Funkkommunikationssystems der zweiten Funkstation (BS1, BS2) angibt.

3. Verfahren zum Weiterleiten eines Informationselements IE2),
**dadurch gekennzeichnet,**
**dass** eine Teilnehmerstation (MS1) das Informationselement (IE1, IE2) ohne Auslesen seines Inhalts über eine Luftschnittstelle von einer zweiten Funkstation (BS1, BS2) empfängt und über eine Luftschnittstelle an eine erste Funkstation (BS1, AP) weiterleitet, wobei dem Informationselement (IE1, IE2) die Teilnehmerstation (MS1) nicht selbst betreffende Konfigurationsparameter der zweiten Funkstation (BS1, BS2) und/oder Konfigurationsparameter eines Funkkommunikationssystems der zweiten Funkstation (BS1, BS2) entnehmbar sind.

4. Verfahren nach einem der vorstehenden Ansprüche,
**dadurch gekennzeichnet,**
**dass** dem Informationselement (IE1, IE2) entnehmbare Konfigurationsparameter bei der Einstellung der Konfigurationsparameter der ersten Funkstation (BS1, AP) berücksichtigt werden.

5. Verfahren nach einem der vorstehenden Ansprüche,
**dadurch gekennzeichnet,**
**dass** dem Informationselement (IE1, IE2) entnehmbare Konfigurationsparameter zumindest teilweise derart verschlüsselt sind, dass ausschließlich Funkstationen (BS1, BS2) des die Konfigurationsparameter betreffenden Funkkommunikationssystems diese Konfigurationsparameter entschlüsseln können.

6. Verfahren nach einem der vorstehenden Ansprüche,
**dadurch gekennzeichnet,**
**dass** dem Informationselement eine Referenzzeit entnehmbar ist, zu der das Informationselement (IE1, IE2) erstellt wurde.

7. Verfahren nach einem der vorstehenden Ansprüche,
**dadurch gekennzeichnet,**
**dass** dem Informationselement (IE1, IE2) eine Kennung (K1, K2) der zweiten Funkstation (BS1, BS2) entnehmbar ist.

8. Verfahren nach einem der vorstehenden Ansprüche,
**dadurch gekennzeichnet,**
**dass** dem Informationselement (IE1, IE2) von der Teilnehmerstation (MS1) nicht ermittelte Konfigurationsparameter der zweiten Funkstation (BS1, BS2) entnehmbar sind.

9. Funkstation (BS1, AP) mit Mitteln (SE2, P2, SE5, P5) zum Empfangen eines weitergeleiteten Informationselements (IE1, IE2),
**dadurch gekennzeichnet,**
**dass** die Mittel (SE2, P2, SE5, P5) zum Empfangen derart ausgebildet sind, dass sie das von einer Teilnehmerstation (MS1) weitergeleitete Informationselement (IE1, IE2) über eine Luftschnittstelle empfangen, wobei dem Informationselement (IE1, IE2) die Teilnehmerstation (MS1) nicht selbst betreffende Konfigurationsparameter einer anderen Funkstation (BS1, BS2) und/oder Konfigurationsparameter eines Funkkommunikationssystems der anderen Funkstation (BS1, BS2) entnehmbar sind.

10. Funkstation (BS1, BS2) mit Mitteln (SE1, P1, SE2, P2) zum Senden eines weiterzuleitenden Informationselements (IE1, IE2),
**dadurch gekennzeichnet, dass**
- die Mittel (SE1, P1, SE2, P2) zum Senden derart ausgebildet sind, dass sie das Informationselement (IE1, IE2) ausschließlich zur Weiterleitung an eine Teilnehmerstation (MS1) senden,
- und eine Steuereinheit (P1, P2) vorhanden ist, um in dem Informationselement (IE1, IE2) die Teilnehmerstation (MS1) nicht selbst betreffende Konfigurationsparameter der Funkstation (BS1, BS2) und/oder Konfigurationsparameter eines Funkkommunikationssystems der Funkstation (BS1, BS2) anzugeben.

11. Teilnehmerstation (MS1) mit Mitteln (SE3, P3) zum Empfangen eines Informationselements (IE1, IE2) über eine Luftschnittstelle von einer zweiten Funkstation (BS1, BS2) und mit Mitteln (SE3, P3) zum Weiterleiten des Informationselements (IE1, IE2) über eine Luftschnittstelle an eine erste Funkstation (BS1, AP),
**dadurch gekennzeichnet,**
**dass** eine Steuereinheit (P3) derart ausgebildet ist, dass das Informationselement (IE1, IE2) ohne Auslesen seines Inhalts weitergeleitet wird, wobei dem Informationselement (IE1, IE2) die Teilnehmerstation (MS1) nicht selbst betreffende Konfigurationsparameter der zweiten Funkstation (BS1, BS2) und/oder Konfigurationsparameter eines Funkkommunikationssystems der zweiten Funkstation (BS1, BS2) entnehmbar sind.
